# EUROPEAN PATENT APPLICATION

(11) **EP 4 528 456 A1**
(43) Date of publication of application: **26.03.2025**
(21) Application number: 23807455.3
(22) Date of filing: 02.05.2023
(51) Int. Cl.: G06F 3/04842, G06F 3/14, G09G 5/00, G09G 5/02, G09G 5/10

(54) **INFORMATION PROCESSING APPARATUS, INFORMATION PROCESSING PROGRAM, AND INFORMATION PROCESSING SYSTEM**

(30) Priority: 17.05.2022 JP 2022080645
(71) Applicant: Sony Group Corporation, Tokyo 108-0075 (JP)
(72) Inventor: HAMASAKI, Hiroki, Tokyo 108-0075 (JP)
(74) Representative: 2SPL Patentanwälte PartG mbB
(86) International application number: PCT/JP2023/017187
(87) International publication number: WO 2023/223850

(57) **Abstract**

An information processing apparatus causes at least one display device among a plurality of display devices to display a widget screen for selecting one of the plurality of display devices and operating a setting thereof, and changes a luminance of an actual display screen of the selected display device according to the selection of the display device on the widget screen.

## Description

### Field

The present disclosure relates to an information processing apparatus, an information processing program, and an information processing system.

### Background

A plurality of display devices may be connected to one apparatus (see, for example, Patent Literature 1).

### Citation List

### Patent Literature

Patent Literature 1: JP 2014-514661 A

### Summary

### Technical Problem

It is conceivable to operate a setting of each of a plurality of display devices using a widget. A user selects a display device on a widget screen and operates a setting of the selected display device. However, in this case, there is a problem that it is difficult to grasp an actual display device corresponding to the display device selected on the widget screen.

One aspect of the present disclosure makes it possible to easily grasp an actual display device corresponding to a display device selected on a widget screen.

### Solution to Problem

An information processing apparatus according to one aspect of the present disclosure is configured to: cause at least one display device among a plurality of display devices to display a widget screen for selecting one of the plurality of display devices and operating a setting thereof; and change a luminance of an actual display screen of the selected display device according to the selection of the display device on the widget screen.

An information processing program according to one aspect of the present disclosure causes a computer to execute processing of: causing at least one display device among a plurality of display devices to display a widget screen for selecting one of the plurality of display devices and operating a setting thereof; and changing a luminance of an actual display screen of the selected display device according to the selection of the display device on the widget screen.

An information processing system according to one aspect of the present disclosure includes: an information processing apparatus; and a plurality of display devices, wherein the information processing apparatus is configured to: cause at least one display device among the plurality of display devices to display a widget screen for selecting one of the plurality of display devices and operating a setting thereof; and change a luminance of an actual display screen of the selected display device according to the selection of the display device on the widget screen.

### Brief Description of Drawings

FIG. 1 is a diagram illustrating an example of a schematic configuration of an information processing system according to an embodiment.
FIG. 2 is a diagram illustrating an example of functional blocks of an information processing apparatus.
FIG. 3 is a diagram illustrating an example of functional blocks of a display device.
FIG. 4 is a diagram illustrating an example of a widget screen.
FIG. 5 is a diagram illustrating an example of a change in luminance of a display screen.
FIG. 6 is a diagram illustrating an example of a change in luminance of a display screen.
FIG. 7 is a diagram illustrating an example of a change in luminance of a display screen.
FIG. 8 is a flowchart illustrating an example of processing (an information processing method) executed in the information processing system.
FIG. 9 is a diagram illustrating an example of a widget screen.
FIG. 10 is a diagram illustrating an example of a widget screen.
FIG. 11 is a diagram illustrating an example of a hardware configuration.

### Description of Embodiments

Hereinafter, embodiments of the present disclosure will be described in detail with reference to the drawings. Note that, in the following embodiments, the same elements will be denoted by the same reference signs, and redundant description will be omitted.

The present disclosure will be described according to the following order of items.
1. Embodiment
2. Modification
3. Example of Hardware Configuration
4. Example of Effect

### 1. Embodiment

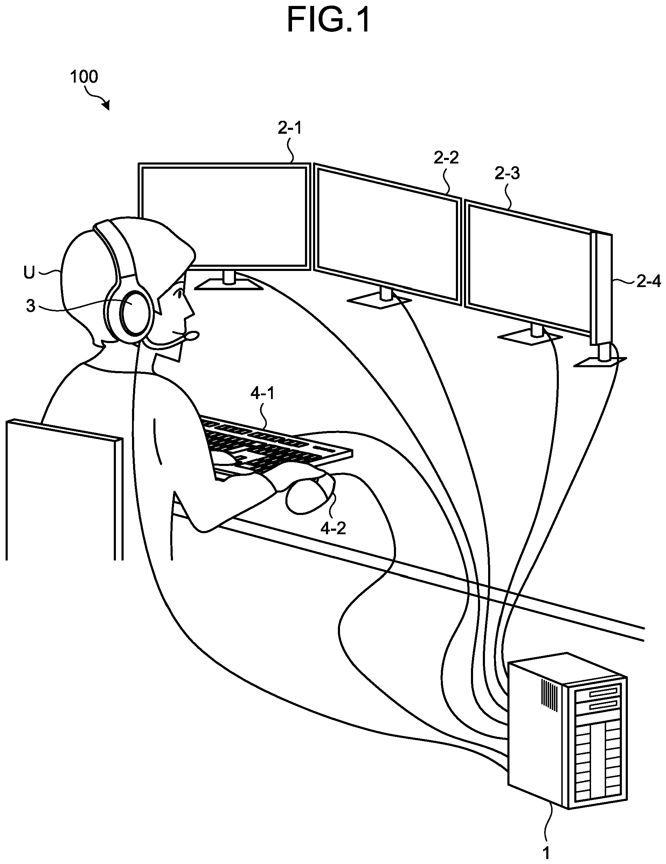

FIG. 1 is a diagram illustrating an example of a schematic configuration of an information processing system according to an embodiment. An information processing system 100 includes an information processing apparatus 1, a plurality of display devices 2, one or more audio devices 3, and one or more operation devices 4. A user of the information processing system 100 is referred to as a user U for illustration. The information processing system 100 is used for, for example, providing a computer game.

The information processing apparatus 1 executes various types of information processing. The information processing apparatus 1 corresponds to, for example, a main body of a personal computer (PC). In a case where the information processing system 100 provides a computer game, the information processing apparatus 1 functions as a main body of a so-called gaming PC.

The plurality of display devices 2 display video. The video may be interpreted in a sense including an image, and the video and the image may be appropriately read as long as there is no contradiction. In FIG. 1, four display devices 2 are exemplified. The display devices 2 are referred to as a display device 2-1, a display device 2-2, a display device 2-3, and a display device 2-4 to be distinguishable from each other for illustration. Hereinafter, any or all of those display devices may be simply referred to as the display device 2.

The audio device 3 outputs or collects sound. The exemplified audio device 3 is a headset, and is worn on the head of the user U for use.

The operation device 4 is used for an operation of the user U (a user operation). In FIG. 1, an operation device 4-1 and an operation device 4-2 are exemplified as the operation device 4. The operation device 4-1 is a keyboard. The operation device 4-2 is a mouse. Hereinafter, any or all of those operation devices may be simply referred to as the operation device 4.

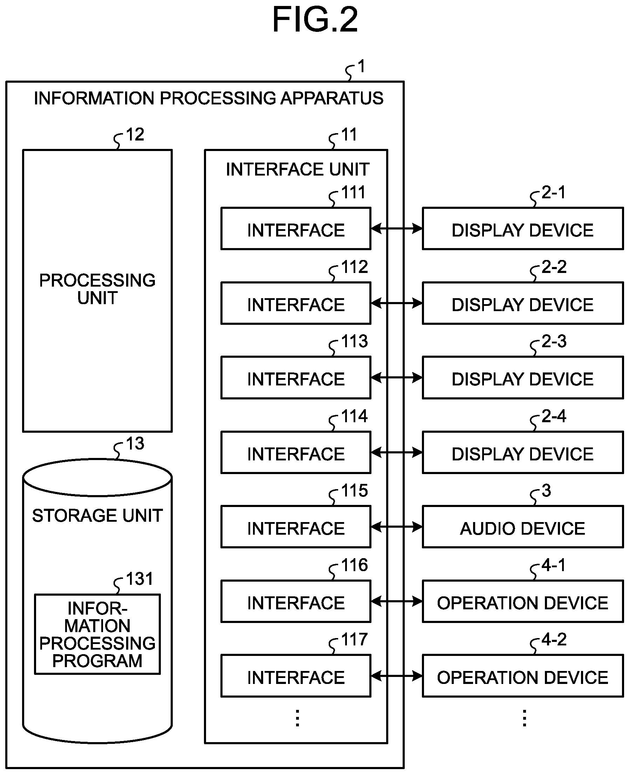

Various devices such as the display device 2, the audio device 3, and the operation device 4 are connected to the information processing apparatus 1. The connection between each of the devices and the information processing apparatus 1 may be a wired connection using a cable or the like, or may be a wireless connection using short-range wireless communication or the like. Note that some of the devices may be connected to the information processing apparatus 1 via another device that is used as a connection hub. The information processing apparatus 1 to which each of the devices is connected will be described with reference to FIG. 2.

FIG. 2 is a diagram illustrating an example of functional blocks of the information processing apparatus. The information processing apparatus 1 includes an interface unit 11, a processing unit 12, and a storage unit 13.

The interface unit 11 is a connection interface unit that provides connection with each of the devices. The interface unit 11 includes a plurality of interfaces. Examples of the plurality of interfaces include an interface 111 to an interface 117.

The display device 2-1, the display device 2-2, the display device 2-3, and the display device 2-4 are connected to the interface 111, the interface 112, the interface 113, and the interface 114. For example, a video signal can be transmitted from the information processing apparatus 1 to the display device 2, the information processing apparatus 1 and the display device 2 can communicate with each other, and the like are possible. Specific examples of the interfaces 111 to 114 include high-definition multimedia interface (HDMI) (registered trademark) interfaces, display port (DP) interfaces, and the like. An example of communication in the case of the HDMI interface is I2C communication. An example of communication in the case of the DP interface is AUX communication.

The audio device 3 is connected to the interface 115. For example, an audio signal can be transmitted from the information processing apparatus 1 to the audio device 3. A specific example of the audio device 3 is a universal serial bus (USB) interface or the like.

The operation device 4-1 and the operation device 4-2 are connected to the interface 116 and the interface 117. For example, an operation signal can be transmitted from the operation device 4 to the information processing apparatus 1. The operation signal is a signal indicating the content of a user operation using the operation device 4.

The processing unit 12 performs an overall control of the information processing apparatus 1 and executes various types of processing. For example, the processing unit 12 executes various types of processing necessary for providing the computer game described at the beginning. In addition, the processing unit 12 executes processing necessary for displaying a widget screen, operating a setting of the display device 2, and the like, which will be described below. Details will be described below again.

The storage unit 13 stores information used by the information processing apparatus 1. The information processing program 131 is exemplified as the information stored in the storage unit 13. The information processing program 131 is a program (software) for causing a computer to function as the information processing apparatus 1.

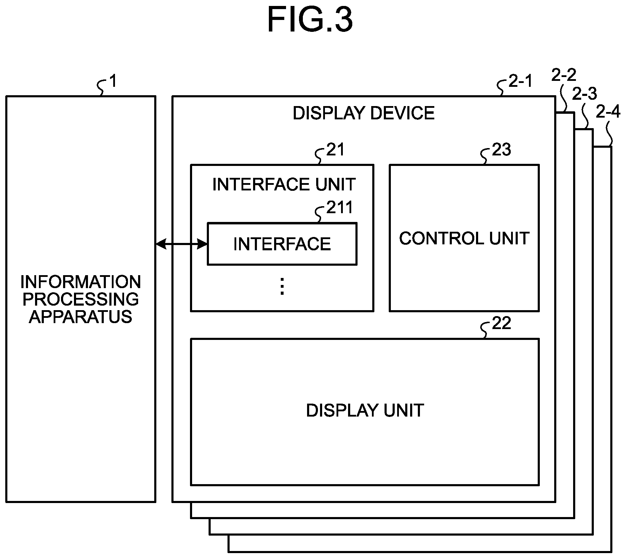

FIG. 3 is a diagram illustrating an example of functional blocks of the display device. The display device 2 includes an interface unit 21, a display unit 22, and a control unit 23.

The interface unit 21 is a connection interface unit that provides at least connection with the information processing apparatus 1. An interface 211 is exemplified as an interface included in the interface unit 21. Note that the interface unit 21 may include interfaces with another display device 2, the audio device 3, and the operation device 4. In this case, the interface unit 21 also functions as a connection hub.

The information processing apparatus 1 is connected to the interface 211. That is, the respective interfaces 211 of the display devices 2-1 to 2-4 and the interfaces 111 to 114 (FIG. 2) of the information processing apparatus 1 are connected to each other. Specific examples of the interface 211 include HDMI interfaces, DP interfaces, and the like, similarly to the interfaces 111 to 114.

The display unit 22 provides a display screen for displaying a video. For example, the display unit 22 includes a display panel. Examples of the display panel include an organic light emitting diode (OLED) panel, a liquid crystal display (LCD) panel, and the like. The display unit 22 may be configured without including a display panel. Examples of such a display unit 22 include a projector and the like.

The control unit 23 performs an overall control of the display device 2 including the interface unit 21 and the display unit 22. For example, the control unit 23 controls the interface unit 21 and the display unit 22 such that a video based on a video signal from the information processing apparatus 1 input to the interface unit 21 is displayed by the display unit 22.

Furthermore, the control unit 23 performs a setting of a display screen provided by the display unit 22. An example of the setting is a change in luminance of the display screen. For example, in a case where the display unit 22 is an OELD, the amount of light emitted from the OLED is changed. In a case where the display unit 22 is an LCD, the amount of light emitted from a backlight or the amount of light transmitted through the LCD panel is changed. Note that the luminance may be interpreted in a sense including a brightness, a contrast, and the like. For example, the luminance is adjusted by changing parameters such as a brightness of an entire screen, a contrast, and a brightness for each color (color adjustment). The luminance, the brightness, the contrast, the color, and the like may be appropriately read as long as there is no contradiction. In addition to the luminance, various settings such as a size of a display screen and a resolution can be changed.

Note that, hereinafter, the display screen provided by the display unit 22 of the display device 2 will also be simply referred to as the display screen of the display device 2 or the display screen.

For example, the processing unit 12 of the information processing apparatus 1 transmits a setting command for instructing a setting of the display screen to the interface unit 21 of the display device 2 via the interface unit 11. The control unit 23 of the display device 2 sets the display screen in accordance with the setting command received via the interface unit 21. Note that, as a matter of course, the current setting state of the display screen of each display device 2 is grasped by the processing unit 12 of the information processing apparatus 1. The processing unit 12 may transmit the setting command only when the setting of the display screen of the display device 2 is changed from the current setting.

In one embodiment, the above-described change of the setting of the display screen may be a change of the setting within a range defined by common standards. In this case, the display device 2 may be designed to satisfy the standards.

In the present embodiment, the processing unit 12 of the information processing apparatus 1 causes at least one display device 2 among the plurality of display devices 2 to display a widget screen. The widget screen is used by the user U to select one of the plurality of display devices 2 and operate a setting thereof. The widget screen may also be used to operate a setting of the audio device 3. The display device 2 on which the widget screen is displayed may be arbitrarily set.

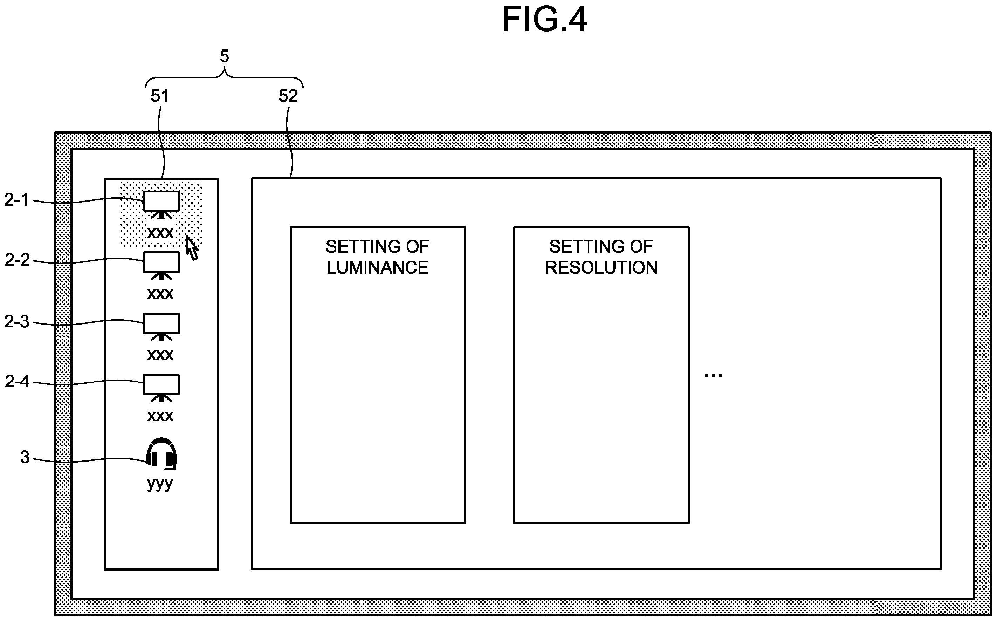

FIG. 4 is a diagram illustrating an example of a widget screen. The widget screen 5 includes a selection screen 51 and a setting operation screen 52.

The selection screen 51 is a screen for selecting one device of which a setting is to be operated from among the devices connected to the information processing apparatus 1. The display devices 2-1 to 2-4 and the audio device 3 are displayed on the selection screen 51 in a selectable manner. Each of the devices is displayed with an icon and a model number. In this example, the display devices 2-1 to 2-4 are displays having the same model number, and the model number is schematically illustrated as xxx. The model number of the audio device 3 is schematically illustrated as yyy. Note that, in the example illustrated in FIG. 4, the display device 2-1 is selected by a user operation from among the devices displayed on the selection screen 51.

The setting operation screen 52 is a screen for operating a setting of the device selected on the selection screen 51. For example, as schematically illustrated in FIG. 4, a luminance, a resolution, or the like of a display screen of the selected display device 2 can be set by a user operation. The processing unit 12 of the information processing apparatus 1 changes the setting of the display screen of the selected display device 2 so that the setting performed by the user operation on the setting operation screen 52 is reflected.

For example, by using the widget screen 5 as described above, the user U can operate settings of the display devices 2-1 to 2-4 and the like connected to the information processing apparatus 1. Here, there is a problem that it is difficult to grasp an actual display device 2 corresponding to the display device 2 selected on the widget screen 5. That is, even though the icons and the model numbers of the display devices 2-1 to 2-4 are displayed on the widget screen as illustrated in FIG. 4, it is difficult to immediately specify an actual display device 2 only from such information. In a case where there is a plurality of display devices 2 having the same model number, the problem becomes more apparent. Such a problem is addressed by the technologies disclosed herein.

Specifically, in the present embodiment, when one of the display devices 2 is selected on the widget screen 5, the processing unit 12 of the information processing apparatus 1 changes a luminance of an actual display screen of the selected display device 2 according to the selection of the display device 2. For example, the processing unit 12 of the information processing apparatus 1 changes the luminance of the actual display screen of the display device 2 by changing a setting of a display screen of the selected display device **2.** The setting is changed, for example, using the above-described setting command.

Note that the processing unit 12 of the information processing apparatus 1 may change the luminance of the actual display screen of the display device 2 by changing a video signal to the selected display device 2. This method may be used instead of the above-described change of the setting of the display screen, or may be used in combination with the change of the setting of the display screen.

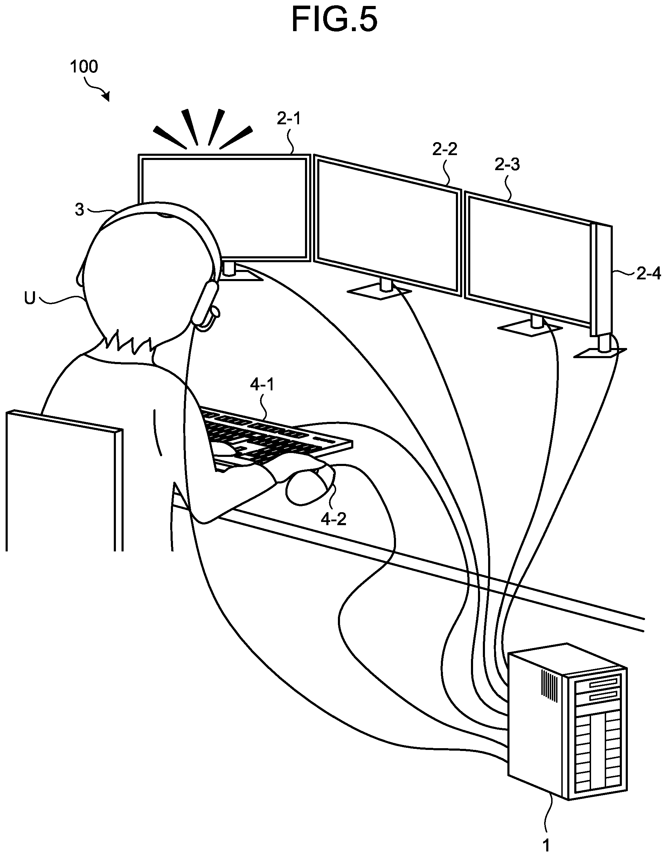

FIG. 5 is a diagram illustrating an example of a change in luminance of a display screen. It is assumed that the display device 2-1 on the widget screen 5 described above is selected. The processing unit 12 of the information processing apparatus 1 changes a luminance of an actual display screen of the selected display device 2-1. The user U recognizes and specifies the display device 2-1 as the display device 2-1 selected on the widget screen 5. In this way, it is possible to easily grasp an actual display device 2 corresponding to the display device 2 selected on the widget screen 5.

The luminance of the display screen of the display device 2 can be variously changed. In one embodiment, the processing unit 12 of the information processing apparatus 1 repeatedly changes the luminance of the actual display screen of the selected display device 2. The user U can more easily recognize the change in luminance than the case where the luminance of the display screen is changed only once.

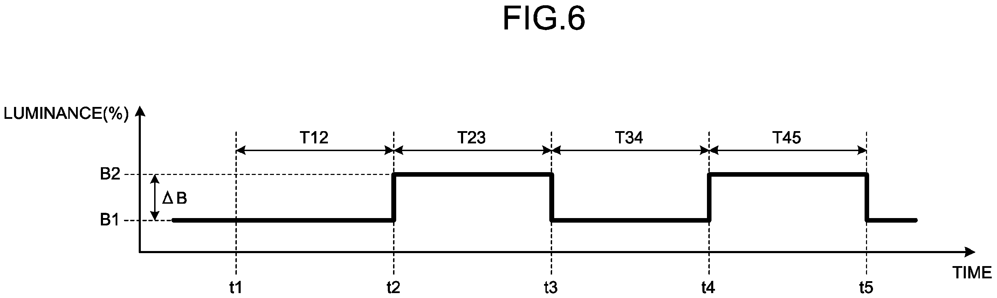

FIG. 6 is a diagram illustrating an example of a change in luminance of a display screen. The horizontal axis of the graph indicates a time. The vertical axis of the graph indicates the luminance of the display screen. In this example, the luminance is expressed in the range of 0% to 100%. The luminance of the display screen alternately changes between luminance B1 (a first luminance) and luminance B2 (a second luminance) higher than luminance B1. More specifically, the luminance of the display screen changes so that the luminance of the display screen becomes luminance B1, luminance B2, luminance B1, and luminance B2 in this order.

At time t1, a display device 2 on the widget screen 5 is selected. At time t2, a luminance of a display screen of the selected display device 2 changes from luminance B1 to luminance B2. At time t3, a luminance of a display screen changes from luminance B2 to luminance B1. At time t4, a luminance of a display screen changes from luminance B1 to luminance B2. At time t5, a luminance of a display screen changes from luminance B2 to luminance B1. The change in luminance ends.

In the example illustrated in FIG. 6, luminance B1 is the same as the initial luminance, i.e. the luminance of the actual display screen of the selected display device 2 before the display device 2 is selected (before time t1). At time t5, the luminance of the display screen returns to luminance B1 which is the initial luminance.

The above-described period from time t1 to time t2 is referred to as a period T12 for illustration. The period T12 may be a wait period from the selection of the display device 2 until a change in luminance of the display screen is started, in other words, a first duration period of luminance B1.

The above-described period from time t2 to time t3 is referred to as a period T23 for illustration. The period T23 is a first period during which the state in which the luminance of the display screen has been changed from luminance B1 to luminance B2 is maintained, in other words, a first period during which luminance B2.

The above-described period from time t3 to time t4 is referred to as a period T34 for illustration. The period T34 is a period during which the luminance of the display screen returns to the initial luminance, in other words, a second duration period of luminance B1.

The above-described period from time t4 to time t5 is referred to as a period T45 for illustration. The period T45 is a period during which the state in which the luminance of the display screen has been changed is maintained, in other words, a second duration period of luminance B2.

Note that the above-described period T23 can also be referred to as a duration period (period T23) of luminance B2 in a case where the luminance of the display screen becomes luminance B1 (period T12), luminance B2 (period T23), and luminance B1 (period T34) in this order. In addition, the above-described period T34 can also be referred to as a duration period of luminance B1 (period T34) in a case where the luminance of the display screen is changed in the following order: luminance B2 (period T23), luminance B1 (period T34), and luminance B2 (period T45).

A difference between luminance B1 and luminance B2 described above is referred to as a luminance difference ΔB for illustration. The luminance difference ΔB indicates a change amount when the luminance of the display screen changes.

The number of repetitions of luminance B1 and luminance B2 is set so that the user U can recognize the selected display device 2 in an appropriate mode in which the visual stimulus to the user U is not too strong. In the above example, the number of repetitions of luminance B1 and luminance B2 is set to two. The period T12, the period T23, the period T34, the period T45, and the luminance difference ΔB are also set to the same effect. For example, the period T12, the period T23, the period T34, and the period T45 are set to about 100 milliseconds. The term "about" may be interpreted in a sense including a certain margin of error, for example, a margin of error of ±10%, ±20%, or ±30%. Specifically, about 100 milliseconds may have a range of 90 milliseconds to 110 milliseconds, a range of 80 milliseconds to 120 milliseconds, a range of 70 milliseconds to 130 milliseconds, or the like. An example of the luminance difference ΔB is about 30%.

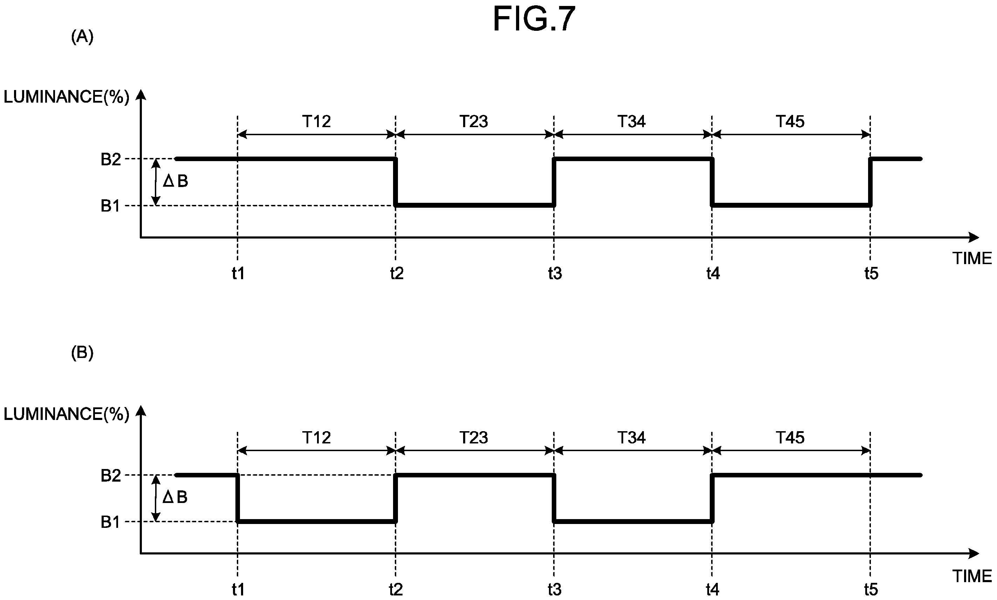

Here, in a case where the initial luminance of the display device 2 is too high, if the luminance is used as it is as luminance B1, the change in the luminance with the luminance difference ΔB may not be realized. For example, in a case where the luminance difference ΔB is 30%, when the initial luminance of the display device 2 is higher than (100%-ΔB), if the luminance is used as luminance B1, luminance B2 is higher than 100%. In such a case, a luminance lower than the initial luminance of the display device 2 by the luminance difference ΔB is set as luminance B1. That is, luminance B2 becomes the same as the initial luminance. This will be described with reference to FIG. 7.

FIG. 7 is a diagram illustrating an example of a change in luminance of a display screen. When compared with FIG. 6 explained above, there is a difference in that not luminance B1 but luminance B2 is the same as the initial luminance (before time t1). At time t5, the luminance of the display screen is maintained at luminance B2 that is the initial luminance.

In the example illustrated in (A) of FIG. 7, a change in luminance of the display screen is started at time t2. In this case, the period T12 is a wait period from the selection of the display device 2 at time t1 until a change in luminance of the display screen is started, in other words, a first duration period of luminance B2. The period T23 is a first period during which the state in which the luminance of the display screen has been changed from luminance B2 to luminance B1 is maintained, in other words, a first period during which luminance B1. The period T34 is a period during which the luminance of the display screen returns to the initial luminance, in other words, a second duration period of luminance B2. The period T45 is a period during which the state in which the luminance of the display screen has been changed is maintained, in other words, a second duration period of luminance B1.

As illustrated in (B) of FIG. 7, there is no wait period, and a change in luminance of the display screen may be immediately started at time t1. In this case, the period T12 is a first duration period of luminance B1. The period T23 is a first duration period of luminance B2. The period T34 is a second duration period of luminance B1. The period T45 provides a second duration period of luminance B2.

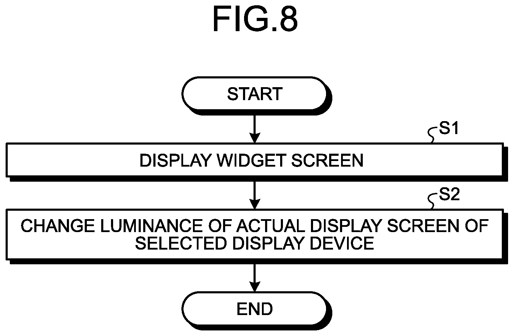

FIG. 8 is a flowchart illustrating an example of processing (an information processing method) executed in the information processing system. Since the specific processing is as described above, the detailed description thereof will not be repeated.

In Step S1, a widget screen is displayed. The processing unit 12 of the information processing apparatus 1 causes at least one display device 2 among the plurality of display devices 2 to display a widget screen 5.

In Step S2, a luminance of an actual display screen of the selected display device changes. The processing unit 12 of the information processing apparatus 1 changes a luminance of an actual display screen of the selected display device 2 according to the selection of the display device on the widget screen 5 in Step S1 described above.

### 2. Modification

The technologies disclosed herein are not limited to the above-described embodiments. Some modifications will be described.

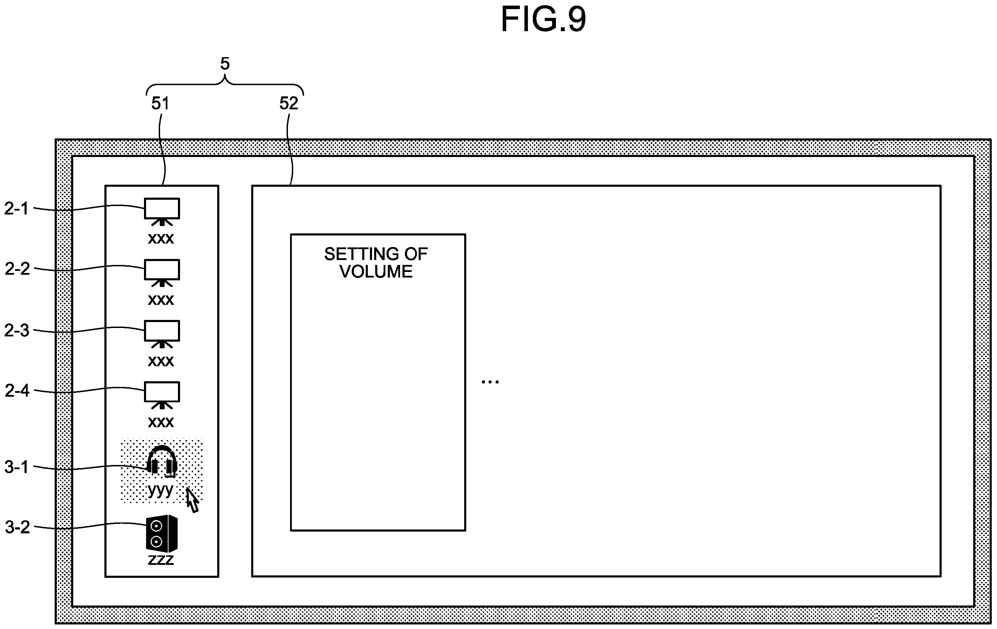

In one embodiment, a plurality of audio devices 3 may be connected to the information processing apparatus 1. In that case, the processing unit 12 of the information processing apparatus 1 may change an output of one of the audio devices 3 selected on a widget screen 5. This will be described with reference to FIG. 9.

FIG. 9 is a diagram illustrating an example of a widget screen. As the plurality of audio devices 3, an audio device 3-1 and an audio device 3-2 are also displayed in a selectable manner. In this example, the audio device 3-1 is a headset, and the audio device 3-2 is a speaker. The model number of the audio device 3-2 is schematically illustrated as zzz. In this example, the audio device 3-1 is selected, and a volume of the audio device 3-1 may be set or the like by a user operation as schematically illustrated in FIG. 9. The processing unit 12 of the information processing apparatus 1 changes the setting of the selected audio device 3 so that the setting performed by the user operation on the setting operation screen 52 is reflected.

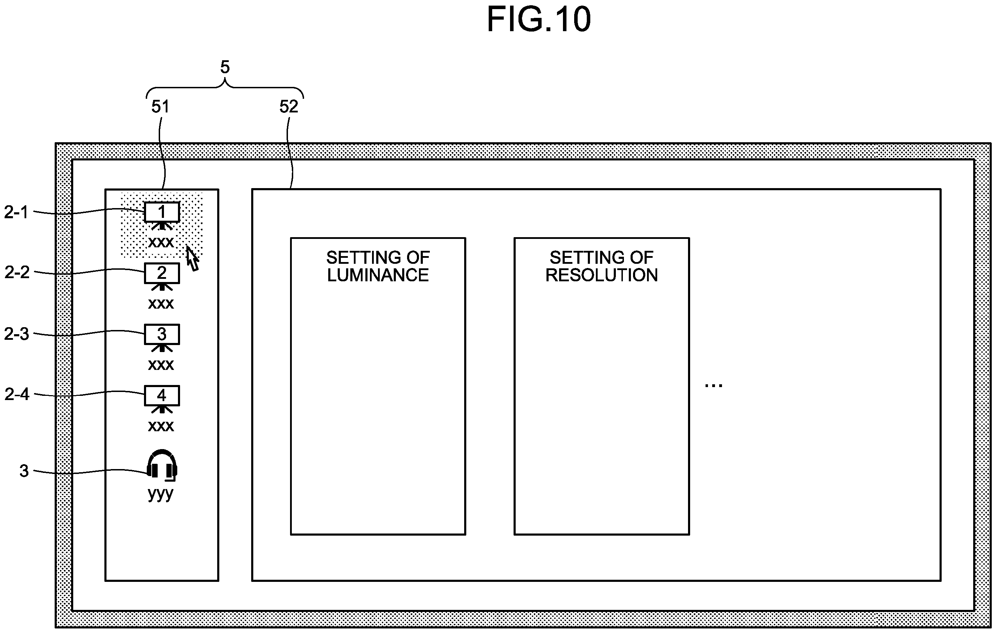

In one embodiment, the processing unit 12 of the information processing apparatus 1 may display two or more display devices 2 having the same model number in different modes on the widget screen 5. This will be described with reference to FIG. 10.

FIG. 10 is a diagram illustrating an example of a widget screen. When compared with FIG. 4 explained above, different identification numbers 1 to 4 are assigned to the icons of the display devices 2-1 to 2-4 having the same model number. As a result, the display devices 2-1 to 2-4 having the same model number can be easily distinguished from each other.

The identification numbers may be reassigned in a timely manner. The identification numbers may be reassigned, for example, when the widget screen is restarted, when the display device 2 is connected/disconnected, when the power button is turned off/on, when the standby state is returned, when the input is switched, when the factory reset is executed, or the like.

In the above-described embodiments, it has been described as an example that the information processing system 100 is used for a computer game. However, the use of the information processing system 100 is not limited to the provision of the computer game. Any application using the plurality of display devices 2 may be provided by the information processing system 100.

### 3. Example of Hardware Configuration

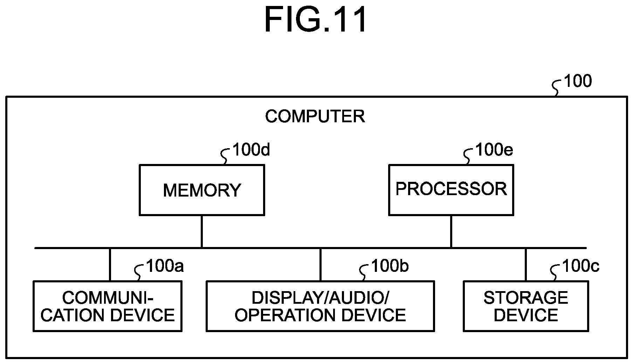

FIG. 11 is a diagram illustrating an example of a hardware configuration. An exemplified computer functions as the information processing system 100 described so far. As the hardware configuration of the computer, a communication device 100a, a display/audio/operation device 100b, a storage device 100c, a memory 100d, and a processor 100e, which are connected to each other by a bus, are exemplified.

The communication device 100a is a network interface card or the like, and enables communication with other devices. The communication device 100a is mounted on, for example, the information processing apparatus 1. The display/audio/operation device 100b corresponds to the display device 2, the audio device 3, and the operation device 4 described so far. The storage device 100c and the memory 100d are mounted on the information processing apparatus 1. For example, the storage device 100c corresponds to the storage unit 13 of the information processing apparatus 1. Specific examples of the storage device 100c include a hard disk drive (HDD), a read only memory (ROM), and a random access memory (RAM). The memory 100d may be a part of the storage device 100c.

The processor 100e corresponds to the processing unit 12 of the information processing apparatus 1. For example, the processor 100e loads (reads) a program such as the information processing program 131 in FIG. 1 from the storage device 100c or the like, and develops the program in the memory 100d, thereby causing the computer to execute processing by the processing unit 12 of the information processing apparatus 1.

The programs can be distributed collectively or separately via a network such as the Internet. In addition, these programs can be collectively or separately recorded on a computer-readable recording medium such as a hard disk, a flexible disk (FD), a CD-ROM, a magnetooptical disk (MO), or a digital versatile disc (DVD), and read from the recording medium by the computer for execution.

### 4. Example of Effect

The technologies described above are specified, for example, as follows. One of the technologies described herein is an information processing apparatus 1. As described with reference to FIGS. 1 to 8, etc., (the processing unit 12 of) the information processing apparatus 1 causes at least one display device 2 among a plurality of display devices 2 to display a widget screen 5 for selecting one of the plurality of display devices 2 and operating a setting thereof, and changes a luminance (for example, at least one of a brightness, a contrast, or color of a display screen) of an actual display screen of the selected display device 2 according to the selection of the display device (2) on the widget screen 5.

According to the above-described information processing system 100, the user U can recognize and specify a display device 2 in which the luminance of the actual display screen has changed as the display device 2 selected on the widget screen 5. Therefore, it is possible to easily grasp the actual display device 2 corresponding to the display device 2 selected on the widget screen 5.

As described with reference to FIGS. 2 and 3, etc., the information processing apparatus 1 may change the luminance of the actual display screen of the selected display device 2 by changing a setting of a display screen of the display device 2. For example, by doing so, the luminance of the actual display screen of the display device 2 can be changed.

As described with reference to FIGS. 6 and 7, etc., the information processing apparatus 1 may repeatedly change the luminance of the actual display screen of the selected display device 2. In this case, the information processing apparatus 1 may change the luminance of the actual display screen of the selected display device 2 so that the luminance of the actual display screen of the display device 2 alternately changes between luminance B1 (a first luminance) and luminance B2 (a second luminance). More specifically, the information processing apparatus 1 may change the luminance of the actual display screen of the selected display device 2 so that the luminance of the actual display screen of the display device 2 becomes luminance B1, luminance B2, luminance B1, and luminance B2 in this order. The luminance may be expressed in the range of 0% to 100%, and a difference between luminance B1 and luminance B2 may be about 30%. A duration period (period T34) of luminance B1 when the luminance of the actual display screen of the selected display device 2 becomes luminance B2, luminance B1, and luminance B2 in this order may be about 100 milliseconds, and a duration period (period T23) of luminance B2 when the luminance of the actual display screen of the selected display device 2 becomes luminance B1, luminance B2, and luminance B1 in this order may be about 100 milliseconds. For example, by doing so, the user U can recognize the selected display device 2 in an appropriate mode in which the stimulus to the user U is not too strong.

As described with reference to FIG. 6, etc., luminance B2 may be higher than luminance B1, and luminance B1 out of luminance B1 and luminance B2 may be the same as the luminance of the actual display screen of the selected display device 2 before being selected (before time t1). For example, by using the initial luminance as luminance B1 in this manner, the luminance of the actual display screen of the selected display device 2 can be alternately changed between luminance B1 and luminance B2.

As described with reference to FIG. 7, etc., luminance B2 may be higher than luminance B1, and luminance B2 out of luminance B1 and luminance B2 may be the same as the luminance of the actual display screen of the selected display device 2 before being selected (before time t1). As a result, even when the initial luminance of the selected display device 2 is too high, the luminance of the actual display screen of the display device 2 can be alternately changed between luminance B1 and luminance B2.

As described with reference to FIG. 4, etc., the widget screen 5 may also be used to operate a setting of an audio device 3. A setting of a device other than the display device 2 can be operated.

As described with reference to FIG. 9, etc., the information processing apparatus 1 may display two or more display devices 2 having the same model number among the plurality of display devices 2 in different modes on the widget screen 5. As a result, the display devices 2 of the same model number can be easily distinguished from each other.

An information processing program 131 described with reference to FIGS. 2 and 11, etc. is also one of the technologies disclosed herein. The information processing program 131 causes a computer to execute processing of causing at least one display device 2 among a plurality of display devices 2 to display a widget screen 5 for selecting one of the plurality of display devices 2 and operating a setting thereof, and changing a luminance of an actual display screen of the selected display device 2 according to the selection of the display device on the widget screen 5. As described so far, the information processing program 131 also makes it possible to easily grasp an actual display device 2 corresponding to the display device 2 selected on the widget screen 5.

The information processing program 131 causes a computer to function as the information processing apparatus 1 described above. The various functions of the information processing apparatus 1 described so far are provided. To give some examples, the computer may change the luminance of the actual display screen of the selected display device 2 by changing a setting of a display screen of the display device **2.** The computer may repeatedly change the luminance of the actual display screen of the selected display device **2.** The computer may change the luminance of the actual display screen of the selected display device 2 so that the luminance of the actual display screen of the display device 2 alternately changes between luminance B1 and luminance B2. The computer may change the luminance of the actual display screen of the selected display device 2 so that the luminance of the actual display screen of the display device becomes luminance B1, luminance B2, luminance B1, and luminance B2 in this order. Luminance B2 may be higher than luminance B1, and luminance B1 out of luminance B1 and luminance B2 may be the same as the luminance of the actual display screen of the selected display device 2 before being selected. Alternatively, luminance B2 out of luminance B1 and luminance B2 may be the same as the luminance of the actual display screen of the selected display device 2 before being selected. Note that a computer-readable recording medium on which the information processing program 131 is recorded is also one of the technologies disclosed herein.

An information processing method described with reference to FIG. 8, etc. is also one of the technologies disclosed herein. The information processing method includes displaying a widget screen 5 for selecting one of a plurality of display devices 2 and operating a setting thereof (Step S1), and changing a luminance of an actual display screen of the selected display device 2 according to the selection of the display device on the widget screen 5 (Step S2). As described so far, the information processing method also makes it possible to easily grasp an actual display device 2 corresponding to the display device 2 selected on the widget screen 5.

An information processing system 100 described with reference to FIG. 1, etc. is also one of the technologies disclosed herein. The information processing system 100 includes an information processing apparatus 1 and a plurality of display devices 2, and (a processing unit 12 of) the information processing apparatus 1 causes at least one display device 2 among the plurality of display devices 2 to display a widget screen 5 for selecting one of the plurality of display devices 2 and operating a setting thereof, and changes a luminance of an actual display screen of the selected display device 2 according to the selection of the display device on the widget screen 5. As described so far, the information processing system 100 also makes it possible to easily grasp an actual display device 2 corresponding to the display device 2 selected on the widget screen 5.

Note that the effects described in the present disclosure are merely examples, and are not limited to the disclosed contents. There may be other effects.

Although the embodiments of the present disclosure have been described above, the technical scope of the present disclosure is not limited to the above-described embodiments, and various modifications can be made without departing from the gist of the present disclosure. In addition, components in the different embodiments and modifications may be appropriately combined.

Note that the present technology can also take the following configurations.
(1) An information processing apparatus configured to:
   cause at least one display device among a plurality of display devices to display a widget screen for selecting one of the plurality of display devices and operating a setting thereof; and
   change a luminance of an actual display screen of the selected display device according to the selection of the display device on the widget screen.
(2) The information processing apparatus according to (1), wherein
   the luminance of the actual display screen of the selected display device is changed by changing a setting of a display screen of the display device.
(3) The information processing apparatus according to (1) or (2), wherein
   the luminance of the actual display screen of the selected display device is repeatedly changed.
(4) The information processing apparatus according to any one of (1) to (3), wherein
   the luminance of the actual display screen of the selected display device is changed so that the luminance of the actual display screen of the display device alternately changes between a first luminance and a second luminance.
(5) The information processing apparatus according to (4), wherein
   the luminance of the actual display screen of the selected display device is changed so that the luminance of the actual display screen of the display device becomes the first luminance, the second luminance, the first luminance, and the second luminance in this order.
(6) The information processing apparatus according to (4) or (5), wherein
   the second luminance is higher than the first luminance, and
   the first luminance out of the first luminance and the second luminance is the same as the luminance of the actual display screen of the selected display device before being selected.
(7) The information processing apparatus according to (4) or (5), wherein
   the second luminance is higher than the first luminance, and
   the second luminance out of the first luminance and the second luminance is the same as the luminance of the actual display screen of the selected display device before being selected.
(8) The information processing apparatus according to any one of (4) to (7), wherein
   the luminance is expressed in the range of 0% to 100%, and
   a difference between the first luminance and the second luminance is about 30%.
(9) The information processing apparatus according to any one of (4) to (8), wherein
   a duration period of the first luminance when the luminance of the actual display screen of the selected display device becomes the second luminance, the first luminance, and the second luminance in this order is about 100 milliseconds, and
   a duration period of the second luminance when the luminance of the actual display screen of the selected display device becomes the first luminance, the second luminance, and the first luminance in this order is about 100 milliseconds.
(10) The information processing apparatus according to any one of (1) to (9), wherein
   the widget screen is also used to operate a setting of an audio device.
(11) The information processing apparatus according to any one of (1) to (10), wherein
   two or more display devices having the same model number among the plurality of display devices are displayed in different modes on the widget screen.
(12) The information processing apparatus according to any one of (1) to (11), wherein
   the luminance of the display screen includes at least one of a brightness, a contrast, or a color of screen display.
(13) An information processing program for causing a computer to execute processing of:
   causing at least one display device among a plurality of display devices to display a widget screen for selecting one of the plurality of display devices and operating a setting thereof; and
   changing a luminance of an actual display screen of the selected display device according to the selection of the display device on the widget screen.
(14) The information processing program according to (13), wherein
   the computer changes the luminance of the actual display screen of the selected display device by changing a setting of a display screen of the display device.
(15) The information processing program according to (13) or (14), wherein
   the computer repeatedly changes the luminance of the actual display screen of the selected display device.
(16) The information processing program according to any one of (13) to (15), wherein
   the computer changes the luminance of the actual display screen of the selected display device so that the luminance of the actual display screen of the display device alternately changes between a first luminance and a second luminance.
(17) The information processing program according to (16), wherein
   the computer changes the luminance of the actual display screen of the selected display device so that the luminance of the actual display screen of the display device becomes the first luminance, the second luminance, the first luminance, and the second luminance in this order.
(18) The information processing program according to (16) or (17), wherein
   the second luminance is higher than the first luminance, and
   the first luminance out of the first luminance and the second luminance is the same as the luminance of the actual display screen of the selected display device before being selected.
(19) The information processing program according to (16) or (17), wherein
   the second luminance is higher than the first luminance, and
   the second luminance out of the first luminance and the second luminance is the same as the luminance of the actual display screen of the selected display device before being selected.
(20) An information processing system including:
   an information processing apparatus; and
   a plurality of display devices,
   in which the information processing apparatus is configured to:
      cause at least one display device among the plurality of display devices to display a widget screen for selecting one of the plurality of display devices and operating a setting thereof; and
      change a luminance of an actual display screen of the selected display device on the widget screen.
(21) An information processing method including:
   displaying a widget screen for selecting one of a plurality of display devices and operating a setting thereof; and
   changing a luminance of an actual display screen of the selected display device according to the selection of the display device on the widget screen.

### Reference Signs List

100 INFORMATION PROCESSING SYSTEM
1 INFORMATION PROCESSING APPARATUS
11 INTERFACE UNIT
111 INTERFACE
112 INTERFACE
113 INTERFACE
114 INTERFACE
115 INTERFACE
116 INTERFACE
117 INTERFACE
12 PROCESSING UNIT
13 STORAGE UNIT
131 INFORMATION PROCESSING PROGRAM
2 DISPLAY DEVICE
21 INTERFACE UNIT
22 DISPLAY UNIT
23 CONTROL UNIT
3 AUDIO DEVICE
4 OPERATION DEVICE
100a COMMUNICATION DEVICE
100b DISPLAY/AUDIO/OPERATION DEVICE
100c STORAGE DEVICE
100d MEMORY
100e PROCESSOR

## Claims

1. An information processing apparatus configured to:
cause at least one display device among a plurality of display devices to display a widget screen for selecting one of the plurality of display devices and operating a setting thereof; and
change a luminance of an actual display screen of the selected display device according to the selection of the display device on the widget screen.

2. The information processing apparatus according to claim 1, wherein
the luminance of the actual display screen of the selected display device is changed by changing a setting of a display screen of the display device.

3. The information processing apparatus according to claim 1, wherein
the luminance of the actual display screen of the selected display device is repeatedly changed.

4. The information processing apparatus according to claim 1, wherein
the luminance of the actual display screen of the selected display device is changed so that the luminance of the actual display screen of the display device alternately changes between a first luminance and a second luminance.

5. The information processing apparatus according to claim 4, wherein
the luminance of the actual display screen of the selected display device is changed so that the luminance of the actual display screen of the display device becomes the first luminance, the second luminance, the first luminance, and the second luminance in this order.

6. The information processing apparatus according to claim 4, wherein
the second luminance is higher than the first luminance, and
the first luminance out of the first luminance and the second luminance is the same as the luminance of the actual display screen of the selected display device before being selected.

7. The information processing apparatus according to claim 4, wherein
the second luminance is higher than the first luminance, and
the second luminance out of the first luminance and the second luminance is the same as the luminance of the actual display screen of the selected display device before being selected.

8. The information processing apparatus according to claim 4, wherein
the luminance is expressed in the range of 0% to 100%, and
a difference between the first luminance and the second luminance is about 30%.

9. The information processing apparatus according to claim 4, wherein
a duration period of the first luminance when the luminance of the actual display screen of the selected display device becomes the second luminance, the first luminance, and the second luminance in this order is about 100 milliseconds, and
a duration period of the second luminance when the luminance of the actual display screen of the selected display device becomes the first luminance, the second luminance, and the first luminance in this order is about 100 milliseconds.

10. The information processing apparatus according to claim 1, wherein
the widget screen is also used to operate a setting of an audio device.

11. The information processing apparatus according to claim 1, wherein
two or more display devices having the same model number among the plurality of display devices are displayed in different modes on the widget screen.

12. The information processing apparatus according to claim 1, wherein
the luminance of the display screen includes at least one of a brightness, a contrast, or a color of screen display.

13. An information processing program for causing a computer to execute processing of:
causing at least one display device among a plurality of display devices to display a widget screen for selecting one of the plurality of display devices and operating a setting thereof; and
changing a luminance of an actual display screen of the selected display device according to the selection of the display device on the widget screen.

14. The information processing program according to claim 13, wherein
the computer changes the luminance of the actual display screen of the selected display device by changing a setting of a display screen of the display device.

15. The information processing program according to claim 13, wherein
the computer repeatedly changes the luminance of the actual display screen of the selected display device.

16. The information processing program according to claim 13, wherein
the computer changes the luminance of the actual display screen of the selected display device so that the luminance of the actual display screen of the display device alternately changes between a first luminance and a second luminance.

17. The information processing program according to claim 16, wherein
the computer changes the luminance of the actual display screen of the selected display device so that the luminance of the actual display screen of the display device becomes the first luminance, the second luminance, the first luminance, and the second luminance in this order.

18. The information processing program according to claim 16, wherein
the second luminance is higher than the first luminance, and
the first luminance out of the first luminance and the second luminance is the same as the luminance of the actual display screen of the selected display device before being selected.

19. The information processing program according to claim 16, wherein
the second luminance is higher than the first luminance, and
the second luminance out of the first luminance and the second luminance is the same as the luminance of the actual display screen of the selected display device before being selected.

20. An information processing system comprising:
an information processing apparatus; and
a plurality of display devices,
wherein the information processing apparatus is configured to:
cause at least one display device among the plurality of display devices to display a widget screen for selecting one of the plurality of display devices and operating a setting thereof; and
change a luminance of an actual display screen of the selected display device according to the selection of the display device on the widget screen.
